# EUROPEAN PATENT APPLICATION

(11) **EP 2 843 982 A1**
(43) Date of publication of application: **04.03.2015**
(21) Application number: 13781225.1
(22) Date of filing: 11.01.2013
(51) Int. Cl.: H04W 16/14, H04W 8/22, H04W 72/04

(54) **CONTROL DEVICE, WIRELESS STATION, WIRELESS TERMINAL, AND METHOD FOR CONTROLLING USE OF SHARED FREQUENCY**

(30) Priority: 27.04.2012 JP 2012102335
(71) Applicant: NEC Corporation, Tokyo 108-8001 (JP)
(72) Inventor: FUTTAKI, Hisashi, Tokyo 1088001 (JP); SUGAHARA, Hiroto, Tokyo 1088001 (JP); AMINAKA, Hiroaki, Tokyo 1088001 (JP)
(74) Representative: Schöniger, Franz-Josef
(86) International application number: PCT/JP2013/000096
(87) International publication number: WO 2013/161136

(57) **Abstract**

In one embodiment, a controller (3) operates to control, based on at least one condition, utilization by a first radio station (1) of a shared frequency shared by a plurality of radio systems including a radio communication system (100). The at least one condition includes a first condition regarding communication capability on the shared frequency of at least one radio terminal (2) belonging to a cell (11) operated by the first radio station (1). This embodiment therefore contributes to efficient utilization of the shared frequency (e.g., TVWS) shared by the plurality of radio systems.

## Description

### Technical Field

The present invention relates to control of utilization of a shared frequency by a radio communication system.

### Background Art

Cognitive radio recognizes a surrounding wireless environment and optimizes communication parameters according to the wireless environment. One example of cognitive radio is a case in which a plurality of radio systems share a frequency band. For example, there is a case in which a frequency band that can be preferentially used by one radio system (called a primary system) is secondarily used by another radio system (called a secondary system). It is discussed in Institute of Electrical and Electronic Engineers (IEEE) 802.22 to standardize a wireless regional area network (WRAN) corresponding to a secondary system which secondarily uses a frequency band (TV channel) licensed to a TV broadcasting system corresponding to a primary system.

When a secondary system secondarily uses a frequency band licensed to a primary system, it is necessary that the secondary system does not have any influence on services provided by the primary system. In order to avoid causing interference to the primary system. the secondary system uses a frequency band that is not temporally or spatially used by the primary system, or adjusts transmission power so that interference experienced by the primary system is below a tolerance level (see, e.g., patent literature 1).

A study has been actively carried out assuming a case in which, in one example of cognitive radio, a primary system is a TV broadcasting system and a secondary system is a cellular system. A frequency band which is not temporally or spatially used in a TV broadcasting system is called a TV white space (WS) (see, e.g., non-patent literature 1).

Some known examples of cognitive radio technology for specifying unused frequency bands include a Geo-location Database (GDB), frequency sensing, and a beacon (or Cognitive Pilot Channel (CPC)). Among these examples, two or more, e.g., a GDB and frequency sensing, or a GDB and a beacon, may be used in combination with each other. A GDB provides statuses of utilization of a shared frequency band (e.g., TV band) or information of a secondarily usable (i.e., unused) frequency band (e.g., TVWS), according to geographical locations.

For example, allocation of TVWS to a Long Term Evolution (LTE) system, which is a cellular system, is executed in the following procedure.
(1) An operation and management apparatus of an LTE system informs a GDB about information of a base station (i.e., evolved Node B (eNB)) which desires to use TVWS. The operation and management apparatus is also called an operation and management system, an Operation Administration and Maintenance (OAM) system, or a Central Control Point. The base station information indicates, for example, a geographical location of the base station and height of an antenna utilized by the base station.
(2) The GDB determines at least one candidate frequency that can be secondarily used based on the base station information, a frequency band, and a calculation formula of propagation loss, and then informs the operation and management apparatus about the at least one candidate frequency.
(3) The operation and management apparatus transfers information of the at least one candidate frequency provided by the GDB to the base station.
(4) The base station selects a frequency used in its cell (hereinafter referred to as an allocated frequency) from the at least one candidate frequency, based on results of sensing the at least one candidate frequency by a radio terminal (i.e., User Equipment (UE)) belonging to its cell. The base station selects, for example, a candidate frequency on which the smallest interference power measured by the radio terminal as the allocated frequency used in its cell.
(5) The base station provides communication services using the allocated frequency.

### Citation List

### Patent Literature

[Patent Literature 1] Japanese Unexamined Patent Application Publication No. 2011-166721

### Non Patent Literature

[Non-Patent Literature 1] ETSI TR 102 907 V1.1.1 (2011-10), "Reconfigurable Radio Systems (RRS); Use Cases for Operation in White Space Frequency Bands", October 2011

### Summary of Invention

### Technical Problem

In the above example of allocating TVWS to a LTE system, a shared frequency (e.g., TVWS) may not be efficiently utilized. In the case of secondary utilization of TVWS, a radio communication system secondarily uses a frequency licensed to a TV broadcasting operator. The frequency licensed to the TV broadcasting operator is different from a frequency licensed to the radio communication system. Therefore, even when TVWS is allocated to a base station, the TVWS cannot be efficiently utilized unless a radio terminal belonging to a cell operated by the base station has communication capability on the TVWS. However, a radio communication system generally ensures backward compatibility. That is, a case is assumed in which the base station must provide communication services to old radio terminals (i.e., legacy terminals) which do not have communication capability on the TVWS. If most of radio terminals belonging to the cell are legacy terminals which do not have the communication capability on the TVWS, the base station cannot efficiently utilize the TVWS.

One object of the present invention is to provide a control apparatus, a radio station, a radio terminal, methods related thereto, and programs that contribute to efficient utilization of a shared frequency (e.g., TVWS) shared by a plurality of radio systems.

### Solution to Problem

In a first aspect, a control apparatus includes a controller. The controller operates to control, based on at least one condition, utilization by a first radio station of a shared frequency shared by a plurality of radio systems including a radio communication system that includes the first radio station. The at least one condition includes a first condition regarding communication capability on the shared frequency of at least one radio terminal belonging to a cell operated by the first radio station.

In a second aspect, a radio station that is used in a radio communication system and communicates with at least one radio terminal is provided. The radio station includes a controller that operates to acquire terminal information regarding the at least one radio terminal and to control utilization by the radio station of a shared frequency shared by a plurality of radio systems including the radio communication system. The terminal information includes information regarding communication capability on the shared frequency of the at least one radio terminal.

In a third aspect, a radio terminal that is used in a radio communication system and communicates with a radio station is provided. The radio terminal includes a controller that operates to send terminal information regarding the radio terminal to the radio station which controls utilization of a shared frequency shared by a plurality of radio systems including the radio communication system. The terminal information includes information regarding communication capability on the shared frequency.

In a fourth aspect, a method of controlling utilization of a shared frequency is provided. The method includes controlling, based on at least one condition, utilization by a first radio station of a shared frequency shared by a plurality of radio systems including a radio communication system that includes the first radio station. The at least one condition includes a first condition regarding communication capability on the shared frequency of at least one radio terminal belonging to a cell operated by the first radio station.

In a fifth aspect, a method performed by a radio station that is used in a radio communication system and communicates with at least one radio terminal is provided. The method includes acquiring terminal information regarding the at least one radio terminal and controlling utilization by the radio station of a shared frequency shared by a plurality of radio systems including the radio communication system. The terminal information includes information regarding communication capability on the shared frequency of the at least one radio terminal.

In a sixth aspect, a method implemented in a radio terminal that is used in a radio communication system and communicates with a radio station is provided. The method includes sending terminal information regarding the radio terminal to the radio station which controls utilization of a shared frequency shared by a plurality of radio systems including the radio communication system. The terminal information includes information regarding communication capability on the shared frequency.

In a seventh aspect, a program is provided for causing a computer to execute the method according to the fourth aspect stated above.

In an eighth aspect, a program is provided for causing a computer to execute the method according to the fifth aspect stated above.

In a ninth aspect, a program is provided for causing a computer to execute the method according to the sixth aspect stated above.

### Advantageous Effects of Invention

According to aspects stated above, it is possible to provide a control apparatus, a radio station, a radio terminal, methods related thereto, and programs that contribute to efficient utilization of a shared frequency (e.g., TVWS) shared by a plurality of radio systems.

### Brief Description of Drawings

Fig. 1 is a diagram showing a configuration example of a radio communication system according to a first embodiment;
Fig. 2 is a flowchart showing a specific example of a procedure for controlling utilization of a shared frequency in the radio communication system according to the first embodiment;
Fig. 3 is a diagram showing another configuration example of the radio communication system according to the first embodiment;
Fig. 4 is a diagram showing another configuration example of the radio communication system according to the first embodiment;
Fig. 5 is a diagram showing another configuration example of the radio communication system according to the first embodiment;
Fig. 6 is a diagram showing a configuration example of a radio network including a radio communication system according to a second embodiment;
Fig. 7 is a sequence diagram showing a specific example of a procedure for controlling utilization of a shared frequency in the radio communication system according to the second embodiment;
Fig. 8 is a flowchart showing an example of an operation regarding control of utilization of the shared frequency by a radio station according to the second embodiment;
Fig. 9 is a sequence diagram showing a specific example of a procedure for stopping the utilization of the shared frequency in the radio communication system according to the second embodiment;
Fig. 10 is a flowchart showing an example of an operation regarding stop of the utilization of the shared frequency by the radio station according to the second embodiment;
Fig. 11 is a diagram showing a configuration example of a radio network including a radio communication system according to a third embodiment;
Fig. 12 is a sequence diagram showing a specific example of a procedure for controlling utilization of a shared frequency in the radio communication system according to the third embodiment;
Fig. 13 is a flowchart showing an example of an operation regarding control of utilization of the shared frequency by a radio station according to the third embodiment;
Fig. 14 is a flowchart showing an example of an operation regarding control of utilization of the shared frequency by an operation and management apparatus (OAM) according to the third embodiment;
Fig. 15 is a sequence diagram showing a specific example of a procedure for controlling utilization of a shared frequency in a radio communication system according to a fourth embodiment;
Fig. 16 is a flowchart showing one example of an operation regarding control of utilization of the shared frequency by a radio station according to the fourth embodiment;
Fig. 17 is a flowchart showing one example of an operation regarding control of utilization of the shared frequency by an operation and management apparatus (OAM) according to the fourth embodiment;
Fig. 18 is a diagram showing a configuration example of a radio network including a radio communication system according to a sixth embodiment;
Fig. 19 is a sequence diagram showing a specific example of a procedure for controlling utilization of a shared frequency in the radio communication system according to the sixth embodiment;
Fig. 20 is a diagram showing a configuration example of a radio network including a radio communication system according to a

### seventh embodiment; and

Fig. 21 is a sequence diagram showing a specific example of a procedure for controlling utilization of a shared frequency in the radio communication system according to the seventh embodiment.

### Description of Embodiments

Hereinafter, with reference to the drawings, specific embodiments will be described in detail. Throughout the drawings, identical and corresponding components are denoted by the same reference symbols, and overlapping descriptions will be omitted as appropriate for the sake of clarification of description.

### First embodiment

In one embodiment, a radio terminal used in a radio communication system and performing communication with a radio station is provided. The radio terminal according to this embodiment has a function of notifying a network of terminal information including information regarding communication capability on a shared frequency. The network includes a control entity which controls utilization of the shared frequency shared by a plurality of radio systems including the radio communication system. In this embodiment, since the radio terminal has a function of reporting the communication capability on the shared frequency, the control entity is able to take into consideration the communication capability on the shared frequency of the radio terminal to control utilization of the shared frequency by the radio communication system. According to this embodiment, the shared frequency can be efficiently utilized.

The terminal information includes, for example, terminal radio access capability or terminal system capability on the shared frequency. The terminal information may further include a terminal communication amount, a terminal service, and terminal location information. The terminal service indicates a type, attribute (e.g., real-time properties, importance, priority, or quality requirement), or service category of a service being executed or requested by the radio terminal. The terminal location information includes, for example, location information acquired by a Global Positioning System (GPS), or location information acquired by a location information service provided by a network (e.g., location information acquired by Observed Time Difference Of Arrival (OTDOA) method). Alternatively, the terminal location information may include radio quality measured by the radio terminal (e.g., a cell identifier and received quality of a known downlink signal of each cell).

### Second embodiment

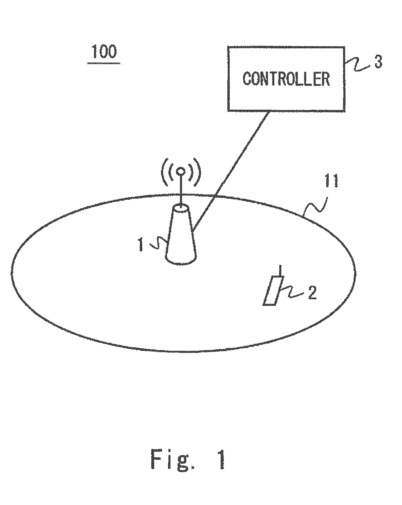

Fig. 1 shows a configuration example of a radio communication system 100 according to this embodiment. The radio communication system 100 may be a cellular system (e.g., LTE system, Universal Mobile Telecommunications System (UMTS), CDMA2000 system (EV-DO, xRTT, HPRD), or Global System for Mobile Communications (GSM) system). Otherwise, the radio communication system 100 may be a non-cellular system (e.g., WiMAX system, wireless Local Area Network (LAN) system).

The radio communication system 100 includes a radio station 1, a radio terminal 2, and a controller 3. The radio station 1 operates a cell 11 and communicates with the radio terminal 2 belonging to the cell 11. The radio station 1 is called, for example, a base station, a relay node (RN), or an access point. The radio terminal 2 is called, for example, a mobile station, a User Equipment (UE), or a Wireless Transmit/Receive Unit (WTRU). The cell 11 means a coverage area of the radio station 1. The cell 11 may be a sector cell.

The controller 3 operates to control, based on at least one condition, utilization by the radio station 1 of a shared frequency shared by a plurality of radio systems including the radio communication system 100. Note that the at least one condition includes a first condition regarding communication capability on the shared frequency of at least one radio terminal 2 belonging to the cell 11 operated by the radio station 1.

The shared frequency may be a frequency band licensed to a primary system (e.g., TVWS). In this case, for example, the radio communication system 100 as a secondary system can secondarily use the shared frequency when the shared frequency is not temporally or spatially used by the primary system. In other words, the radio communication system 100 can secondarily use the shared frequency (e.g., TVWS), which is not licensed (or not exclusively licensed) to the radio communication system 100, as well as a frequency licensed to the radio communication system 100. Note that the primary system may not exist. In such a case, the shared frequency may be equally shared by a plurality of radio communication systems, e.g., a plurality of radio communication systems operated by different operators. The plurality of radio communication systems may include only systems using the same radio access technology (e.g., LTE) or may include systems using different radio access technologies (e.g., LTE, CDMA2000, GSM, WiMAX).

As already described above, there is a case in which the radio communication system 100 is required to have backward compatibility, that is, to also provide communication services to radio terminals (legacy terminals) which do not have communication capability on the shared frequency. If most of the plurality of radio terminals 2 belonging to the cell 11 are legacy terminals which do not have communication capability on the shared frequency, the radio station 1 cannot efficiently utilize the shared frequency even when the shared frequency is allocated.

In order to address this problem, in this embodiment, the controller 3 controls utilization of the shared frequency by the radio station 1 based on the first condition regarding communication capability on the shared frequency of at least one radio terminal 2 belonging to the cell 11. The controller 3 may allow the radio station 1 to use the shared frequency in response to satisfaction of the first condition. In this case, the first condition may only indicate that the shared frequency is efficiently utilized in the cell 11. The first condition may be a condition indicating that a sufficient number of radio terminals 2 having communication capability on the shared frequency belong to the cell 11.

The first condition may be, for example, one of the following (1) to (8), or any combination thereof:
(1) the number of radio terminals 2 having communication capability on the shared frequency exceeds a predetermined number or a predetermined ratio;
(2) the number of radio terminals 2 having terminal radio access capability or terminal system capability on the shared frequency exceeds a predetermined number or a predetermined ratio;
(3) the total amount of traffic of radio terminals 2 having terminal radio access capability or terminal system capability on the shared frequency exceeds a predetermined amount;
(4) the number of radio terminals 2 having terminal radio access capability or terminal system capability on the shared frequency and executing a certain service exceeds a predetermined number or a predetermined ratio;
(5) the number of radio terminals 2 having terminal radio access capability or terminal system capability on the shared frequency and requesting a certain service exceeds a predetermined number or a predetermined ratio;
(6) the number of radio terminals 2 having terminal radio access capability or terminal system capability on the shared frequency and located in a certain area exceeds a predetermined number or a predetermined ratio;
(7) the number of radio terminals 2 capable of using the shared frequency and located in a certain area exceeds a predetermined number or a predetermined ratio;
(8) the total amount of traffic of radio terminals 2 capable of using the shared frequency exceeds a predetermined amount;
(9) the number of radio terminals 2 capable of using the shared frequency and executing a certain service exceeds a predetermined number or a predetermined ratio; and
(10) the number of radio terminals 2 capable of using the shared frequency and requesting a certain service exceeds a predetermined number or a predetermined ratio.

The "terminal radio access capability on the shared frequency" in the conditions (2) to (6) indicates that the radio terminal 2 has a capability of performing radio access to the radio station 1 using the shared frequency. The "terminal radio access capability on the shared frequency" is, for example, capability of using the shared frequency (i.e., whether communication is possible on the frequency band allocated as the shared frequency), or capability of measuring radio quality on the shared frequency (e.g., received power, interference power, Signal to Interference plus Noise Ratio (SINR)).

The "terminal system capability on the shared frequency" in the conditions (2) to (6) is, for example, capability that the radio terminal 2 performs communication with the radio station 1 using the shared frequency, or capability of cognitive radio (e.g., sensing capability) on the shared frequency.

The "total amount of traffic" in the conditions (3) and (8) means the sum of amounts of traffic of the plurality of radio terminals 2. It can be said that the amount of traffic of the radio terminal 2 is equal to volume of communication of the radio terminal 2. The amount of traffic of the radio terminal 2 is, for example, an amount of data communicated by the radio terminal in a certain period, or an amount of data per unit time (i.e., data rate, or throughput). The amount of traffic of the radio terminal 2 may be a predicted value of the amount of traffic which is expected to be generated in the future.

The "certain service" in the conditions (4), (5), (9), and (10) indicates a specific service, or a service category having a specific attribute. The specific attribute includes, for example, real-time property, importance, priority, or quality requirement. Specifically, the certain service may be a service with a large amount of communication which may increase the load of the cell 11.

The "certain area" in the conditions (6) and (7) indicates the geographical location of the radio terminal 2. The certain area may be a relative position from the radio station 1 (e.g., cell edge).

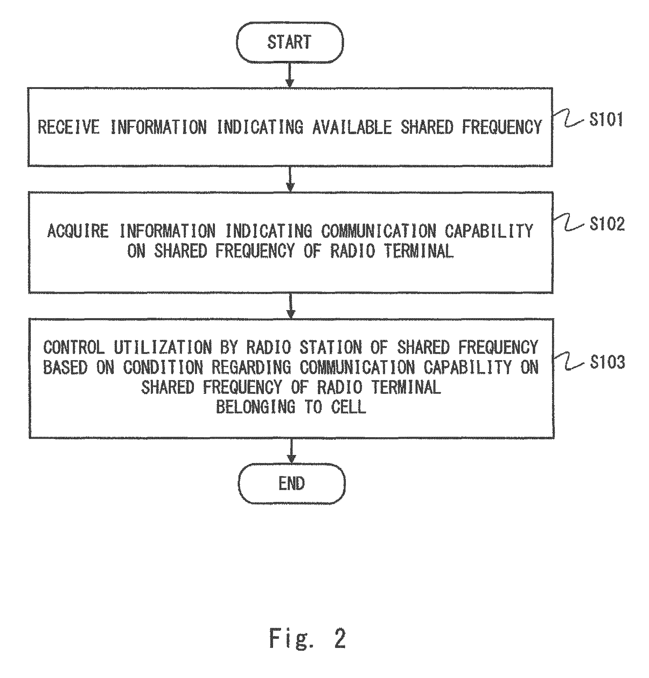

Fig. 2 is a flowchart showing a specific example of a procedure for controlling the utilization of the shared frequency in this embodiment. In Step S101, the controller 3 receives information indicating an available shared frequency. The information indicating the available shared frequency may be supplied directly from a Geo-location Database (GDB) or may be supplied indirectly from the GDB through another apparatus (e.g., Spectrum Manager (SM)).

In Step S102, the controller 3 acquires information indicating the communication capability on the shared frequency of the radio terminal 2 belonging to the cell 11. Specifically, the controller 3 may acquire information of the radio terminal 2 including information indicating the communication capability on the shared frequency (hereinafter referred to as terminal information). The controller 3 uses the terminal information in order to determine whether to allow the utilization of the shared frequency by the radio station 1. The terminal information may therefore include information used for this determination.

The terminal information includes, for example, at least one of terminal radio access capability, terminal system capability, terminal communication amount, terminal service, and terminal location information. The terminal service indicates a type, attribute (e.g., real-time properties, importance, priority, or quality requirement), or service category of a service that is executed or requested by the radio terminal 2. The terminal location information includes, for example, location information acquired by a Global Positioning System (GPS), or location information acquired by a location information service provided by a network (e.g., location information acquired by Observed Time Difference Of Arrival (OTDOA) method). Alternatively, the terminal location information may include radio quality measured by the radio terminal 2 (e.g., a cell identifier and received quality of a known downlink signal of each cell). The radio terminal 2 may send at least a part of the terminal information to the controller 3. Further or alternatively, the radio station 1 may acquire and then send at least a part of the terminal information to the controller 3. Further or alternatively, at least a part of the terminal information may be supplied from a subscriber server which manages subscriber data (e.g., Home Subscriber Server (HSS), Home Location Register (HLR)).

In Step S103, the controller 3 determines, using the terminal information acquired in Step S102, at least one condition including the first condition regarding communication capability on the shared frequency of the radio terminal 2 belonging to the cell 11. The controller 3 allows the radio station 1 to use the shared frequency in response to satisfaction of the at least one condition. For example, the controller 3 may notify the radio station 1 of the shared frequency or a part of the shared frequency as an allocated frequency.

The controller 3 may take into consideration other conditions in addition to the first condition in order to determine whether to allow the radio station 1 to use the shared frequency. The controller 3 may take into consideration the geographical location of the radio station 1. More specifically, the controller 3 may determine whether or not the geographical location of the radio station 1 is within an area in which the utilization of the shared frequency is allowed. Further or alternatively, the controller 3 may take into consideration frequencies that are able to be utilized by the radio station 1. Specifically, the controller 3 may determine whether the shared frequency is within a frequency spectrum range that is able to be utilized by the radio station 1. Further or alternatively, the controller 3 may take into consideration the maximum or minimum value of the downlink transmission power of the radio station 1.

The controller 3 may carry out a procedure for updating the allocated frequency to be allocated to the radio station 1 periodically or in response to a change in the communication capability on the shared frequency of the radio terminal 2 belonging to the cell 11. The controller 3 may carry out a procedure for releasing the allocated frequency (i.e., procedure for stopping the utilization by the radio station 1 of the shared frequency). The controller 3 may stop the utilization by the radio station 1 of the shared frequency when, for example, at least one condition including the first condition is not satisfied.

As described above, this embodiment includes the controller 3. The controller 3 controls the utilization by the radio station 1 of the shared frequency based on the first condition regarding the communication capability on the shared frequency of at least one radio terminal 2 belonging to the cell 11. The first condition may be, for example, a condition indicating that a sufficient number of radio terminals 2 having communication capability on the shared frequency belong to the cell 11. This embodiment is thus able to contribute to the efficient utilization of the shared frequency shared by a plurality of radio systems.

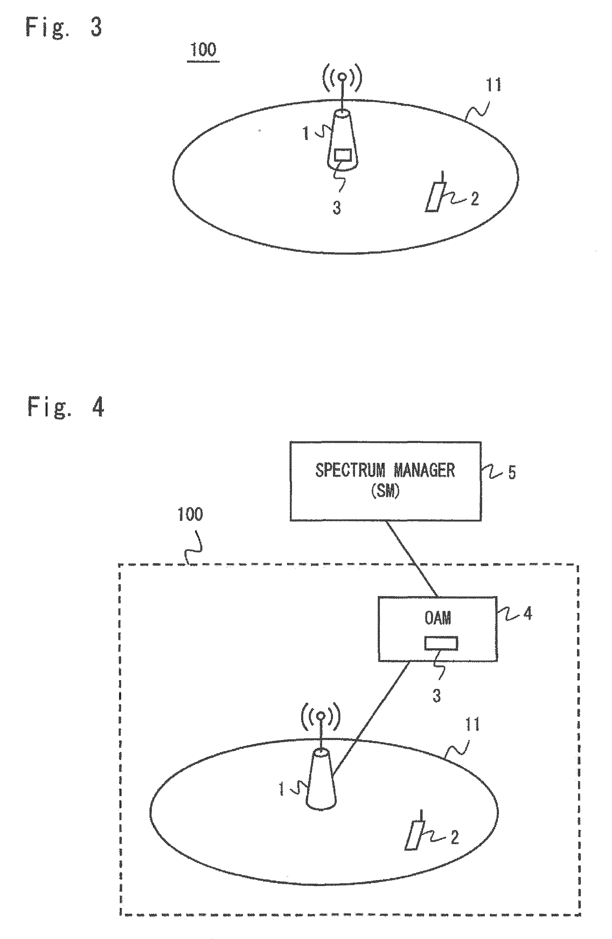

Meanwhile, the arrangement of the controller 3 is determined as appropriate based on the design concept of the network architecture or based on the radio communication standard. As shown in Fig. 3, for example, the controller 3 may be integrally arranged with the radio station 1. In this case, the radio station 1 may determine the utilization of the shared frequency in, for example, the following procedure. The radio station 1 equipped with the controller 3 first sends a request for allocation of the shared frequency to an operation and management apparatus (OAM) (not shown). The radio station 1 then receives a notification indicating at least one candidate frequency from the operation and management apparatus (OAM). Each candidate frequency may be an unused sub-band included in the shared frequency. The radio station 1 then selects the allocated frequency to be utilized by the radio station 1 from at least one candidate frequency. Specifically, the radio station 1 may select, as the allocated frequency, a candidate frequency that satisfies the condition including the first condition stated above. When a plurality of candidate frequencies satisfy the first condition, the radio station 1 may select one candidate frequency that best meets the condition, or may select a predetermined number of candidate frequencies. Lastly, the radio station 1 sends to the operation and management apparatus a report (i.e., an allocated frequency report) indicating the allocated frequency. When none of the candidate frequencies satisfy the condition, the radio station 1 may send to the operation and management apparatus a report indicating that frequency allocation is not performed. The radio station 1 may directly request the candidate frequency to the GDB instead of the operation and management apparatus, and report the allocated frequency to the GDB.

As shown in Fig. 4, the controller 3 may be integrally arranged with the operation and management apparatus (OAM) 4. In this case, the operation and management apparatus 4 may determine the utilization by the radio station 1 of the shared frequency in, for example, the following procedure. The operation and management apparatus 4 first receives a request for allocation of the shared frequency from the radio station 1. The operation and management apparatus 4 then sends a request for a terminal information report to the radio station 1, and receives the terminal information report sent back from the radio station 1. The terminal information report includes terminal information of the plurality of radio terminals 2 belonging to the cell 11 operated by the radio station 1. The operation and management apparatus 4 then determines the allocated frequency which satisfies the condition including the first condition stated above, using the received terminal information report. Lastly, the operation and management apparatus 4 notifies the radio station 1 of the allocated frequency.

Note that, in the example shown in Fig. 4, the operation and management apparatus 4 may receive the terminal information report from the radio station 1 together with the request for allocation of the shared frequency. Alternatively, the operation and management apparatus 4 may receive the terminal information report from the radio station 1 instead of receiving the request for allocation of the shared frequency. This makes it possible to reduce signaling between the operation and management apparatus 4 and the radio station 1.

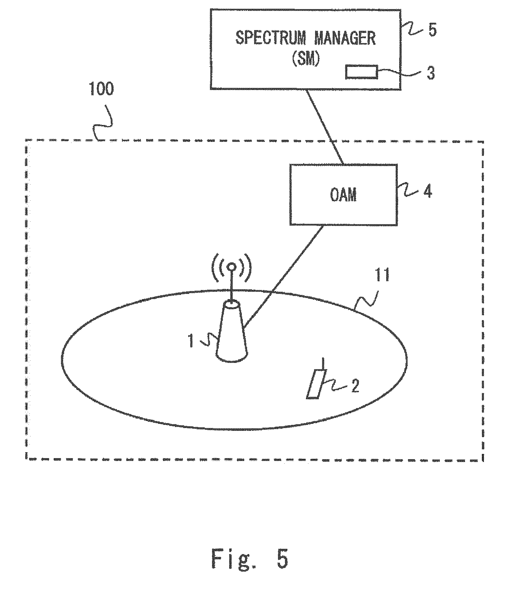

As shown in Fig. 5, the controller 3 may be integrally arranged with a frequency management apparatus 5. The frequency management apparatus 5 is also called a Spectrum Manager (SM), a frequency management system, or a Central Control Point. The frequency management apparatus 5 manages allocation of the shared frequency to a plurality of radio systems including the radio communication system 100. The plurality of radio systems typically include systems operated by different operators.

### Third embodiment

In this embodiment, a specific example will be described of the arrangement of the controller 3 and the procedure for allocating the shared frequency to the radio station 1 described in the second embodiment. Specifically, this embodiment shows an example in which the controller 3 is integrally arranged with the radio station 1.

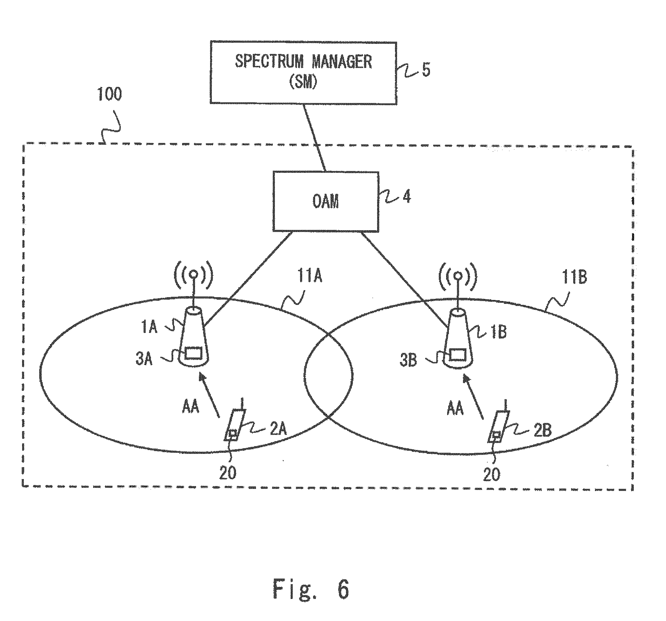

Fig. 6 shows a configuration example of a radio network including the radio communication system 100 according to this embodiment. In the example shown in Fig. 6, the radio communication system 100 includes two radio stations 1A and 1B. The radio station 1A operates a cell 11A and communicates with a radio terminal 2A belonging to the cell 11 A. In a similar way, the radio station 1B operates a cell 11B and communicates with a radio terminal 2B belonging to the cell 11B.

The radio stations 1A and 1B include controllers 3A and 3B, respectively. Each of the controllers 3A and 3B corresponds to the controller 3 described in the second embodiment. Each of the controllers 3A and 3B operates to receive terminal information AA from the radio terminal 2 (2A or 2B). Each of the controllers 3A and 3B determines the determination condition including the first condition stated above using the terminal information AA.

Each of the radio terminals 2A and 2B includes a controller 20. The controller 20 operates to send the terminal information AA to the radio station 1 (1A or 1B) operating the cell 11 (11A or 11B) to which the radio terminal 2 belongs.

The operation and management apparatus (OAM) 4 manages the plurality of radio stations 1 including the radio stations 1A and 1B. The operation and management apparatus (OAM) 4 communicates with a frequency management apparatus (SM) 5, and receives shared frequency information from the frequency management apparatus (SM) 5. The shared frequency information indicates an available shared frequency (i.e., at least one candidate frequency). Note that the operation and management apparatus (OAM) 4 may directly receive the shared frequency information from the Geo-location Database (GDB) without the intervention of the frequency management apparatus (SM) 5.

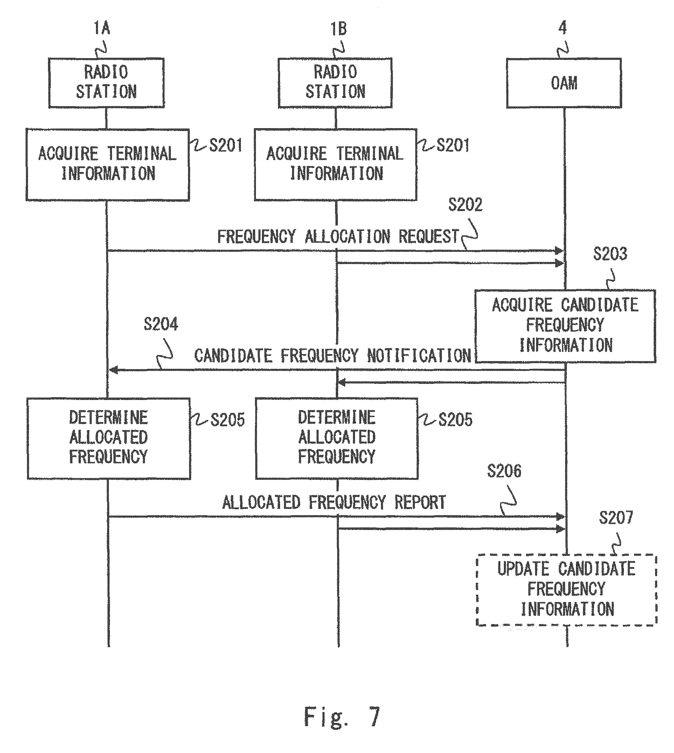

Fig. 7 is a sequence diagram showing a specific example of a procedure for controlling the utilization of the shared frequency in the radio communication system 100 according to this embodiment. While the radio stations 1A and 1B are shown in Fig. 7, these two radio stations operate in a similar way. In Step S201, the radio stations 1A and 1B acquire the terminal information AA regarding the radio terminal 2 (2A or 2B) belonging to the corresponding cell 11 (11A or 11B). In Step S202, the radio stations 1A and 1B send the frequency allocation request to the operation and management apparatus (OAM) 4.

In Step S203, the operation and management apparatus (OAM) 4 acquires information of candidate frequencies that can be allocated among the shared frequencies. The operation and management apparatus (OAM) 4 may receive candidate frequency information from the frequency management apparatus (SM) 5 or the GDB. In Step S204, the operation and management apparatus (OAM) 4 sends a notification indicating at least one candidate frequency to the radio stations 1A and 1B.

In Step S205, the radio stations 1A and 1B determine, for each candidate frequency, whether to satisfy the determination condition including the first condition regarding the communication capability on the shared frequency of the radio terminal 2 (2A or 2B). The radio stations 1A and 1B each select, as the allocated frequency for its cell, a candidate frequency which satisfies the determination condition.

In Step S206, the radio stations 1A and 1B each send a report indicating the allocated frequency to the operation and management apparatus (OAM) 4. When none of the candidate frequencies satisfy the determination condition including the first condition, the radio stations 1A and 1B may each send to the operation and management apparatus (OAM) 4 a report indicating frequency allocation is not performed. In Step S207, the operation and management apparatus (OAM) 4 updates candidate frequency information based on the report from the radio stations 1A and 1B. Note that Step S207 may be omitted.

The procedure shown in Fig. 7 is merely one example. The timing of acquiring the terminal information AA by the radio stations 1A and 1B (S201) and the timing of acquiring the candidate frequency information by the operation and management apparatus (OAM) 4 (S203) may be changed as appropriate. For example, acquisition of the terminal information AA by the radio stations 1A and 1B (S201) may be performed after the reception of the candidate frequency notification (S204). Further, acquisition of the candidate frequency information by the operation and management apparatus (OAM) 4 (S203) may be performed prior to the procedure shown in Fig. 7.

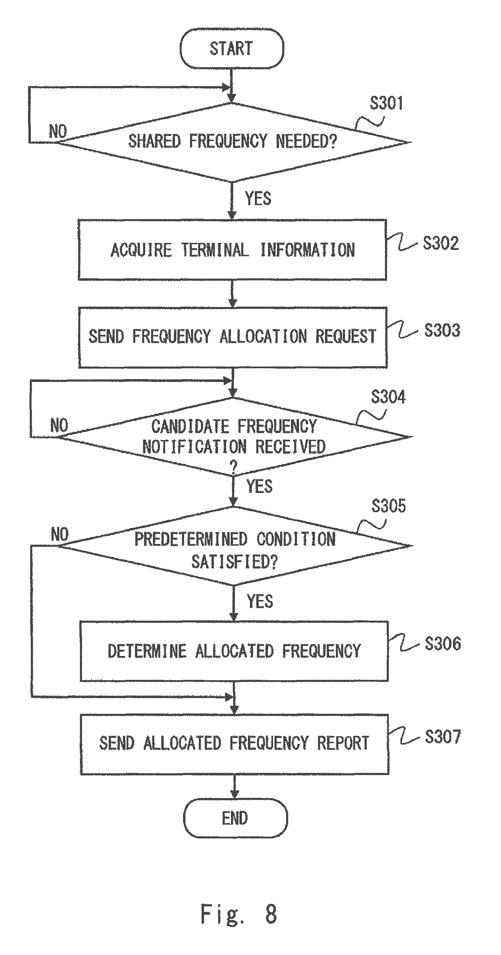

Fig. 8 is a flowchart showing one example of an operation performed by the radio stations 1A and 1B for controlling the utilization of the shared frequency. While an operation of the radio station 1A is described here, an operation of the radio station 1B may be the same. In Step S301, the radio station 1A determines whether allocation of a shared frequency is needed. The radio station 1A may determine that an additional shared frequency is needed when, for example, the load (e.g., amount of communication, the number of radio terminals) of the cell 11A in the licensed band exceeds a predetermined amount.

Step S302 corresponds to Step S201 shown in Fig. 7. Specifically, when it is determined that the shared frequency is needed (YES in Step S301), the radio station 1A acquires the terminal information AA of the radio terminal 2 belonging to the cell 11A (Step S302). Step S303 corresponds to Step S202 shown in Fig. 7. Specifically, in Step S303, the radio station 1A sends the frequency allocation request to the operation and management apparatus (OAM) 4.

Step S304 corresponds to Step S204 shown in Fig. 7. Specifically, in Step S304, the radio station 1A determines whether the candidate frequency notification is received. Steps S305 and S306 correspond to Step S205 shown in Fig. 7. Specifically, upon receiving the candidate frequency notification (YES in Step S304), the radio station 1A determines, using the terminal information acquired in Step S202, for each of the candidate frequencies, whether the determination condition is satisfied (Step S305). Here, the determination condition includes the first condition regarding communication capability on the shared frequency of the radio terminal 2A. When there is a candidate frequency which satisfies the determination condition (YES in Step S305), the radio station 1A determines the candidate frequency as the allocated frequency for its cell 11A (Step S306). When none of candidate frequencies satisfy the determination condition (NO in Step S305), the radio station 1A discards these candidate frequencies and does not determine the allocated frequency.

Step S307 corresponds to Step S206 shown in Fig. 7. Specifically, in Step S307, the radio station 1A sends an allocated frequency report to the operation and management apparatus (OAM) 4. The allocated frequency report indicates the candidate frequency determined as the allocated frequency or indicates that frequency allocation is not conducted.

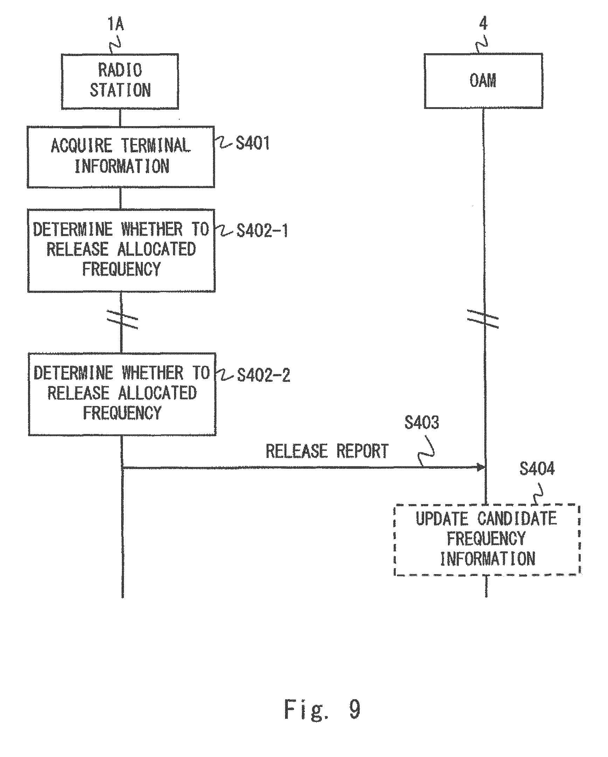

Similar to the description in the second embodiment, the controllers 3A and 3B may each execute a procedure for releasing the allocated frequency (i.e., procedure for stopping the utilization by the radio station 1 of the shared frequency). Described below is a specific example of a procedure for stopping the utilization of the shared frequency. Fig. 9 is a sequence diagram showing a specific example of the procedure for stopping the utilization of the shared frequency. While the operation of the radio station 1A is described here, the radio station 1B may operate in a similar way. In Step S401, the radio station 1A acquires terminal information of the radio terminal 2A belonging to its cell 11A. In Step S402-1, the radio station 1A determines whether to release the allocated frequency, i.e., to stop the utilization of the shared frequency. The radio station 1A may determine, for example, whether the condition same as Step S205 in Fig. 7 or Step S305 in Fig. 8 is satisfied. The radio station 1A may periodically perform a determination in Step S402-1 while using the shared frequency. In the example shown in Fig. 7, continuous utilization of the shared frequency is determined in S402-1 and the stop (release) of the utilization of the shared frequency is determined in Step S402-2. In Step S403, the radio station 1A reports the release of the allocated frequency, i.e., stop of the utilization of the shared frequency, to the operation and management apparatus (OAM) 4. In Step S404, the operation and management apparatus (OAM) 4 updates the candidate frequency information based on the report from the radio station 1A. Note that Step S404 may be omitted.

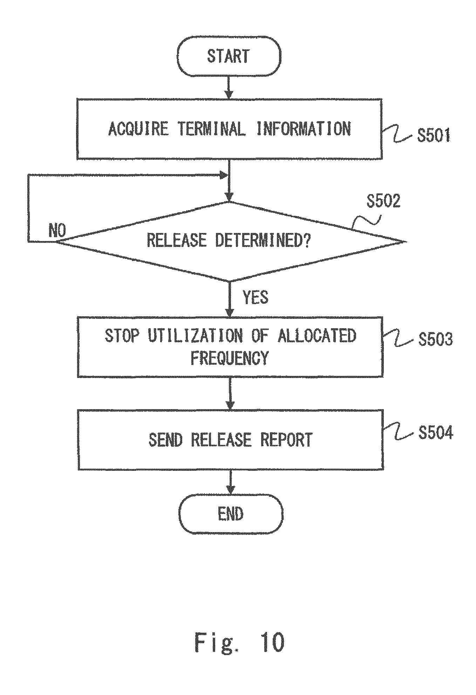

Fig. 10 is a flowchart showing an example of an operation performed by the radio stations 1A and 1B for stopping the utilization of the shared frequency. While the operation of the radio station 1A is described here, the radio station 1B may be operated in a similar way. Step S501 corresponds to Step S401 shown in Fig. 9. Specifically, the radio station 1A acquires terminal information of the radio terminal 2A. Steps S502 and S503 correspond to Steps S402-1 and S402-2 shown in Fig. 9. Specifically, the radio station 1A periodically determines whether to release the allocated frequency (Step S502). When the release of the allocated frequency is determined (YES in Step S502), the radio station 1A stops the utilization of the allocated frequency (Step S503). Lastly, Step S504 corresponds to Step S404 shown in Fig. 9. Specifically, the radio station 1A sends a release report to the operation and management apparatus (OAM) 4.

The procedure shown in Fig. 10 is merely one example. For example, the timing of acquiring the terminal information AA by the radio stations 1A and 1B (S401) may be changed as appropriate. For example, acquisition of the terminal information AA by the radio stations 1A and 1B (S201) may be performed every time the determination is made regarding whether to release the allocated frequency (Step S402).

In this embodiment, the determination condition including the first condition used to determine whether to allow the utilization of the shared frequency may be configured in advance in the radio stations 1A and 1B (controllers 3A and 3B). Alternatively, this determination condition may be sent from the operation and management apparatus (OAM) 4 to the radio stations 1A and 1B together with the candidate frequency notification. The determination condition may be the same or different for the candidate frequencies. Further, the determination condition may be the same or different for the plurality of radio stations 1.

Further, when notifying the radio stations 1A and 1B of the candidate frequencies, the operation and management apparatus (OAM) 4 may send to the radio stations 1A and 1B the upper limit value of the downlink transmission power. Further, the operation and management apparatus (OAM) 4 may send to the radio stations 1A and 1B an absolute time or a relative time indicating the time limit that the candidate frequencies can be utilized. The upper limit value and the absolute or relative time may be the same or different for the candidate frequencies.

### Fourth embodiment

In this embodiment, a specific example of the arrangement of the controller 3 and the procedure for allocating the shared frequency to the radio station 1 described in the second embodiment will be described. Specifically, this embodiment shows an example in which the controller 3 is integrally arranged with the operation and management apparatus (OAM) 4.

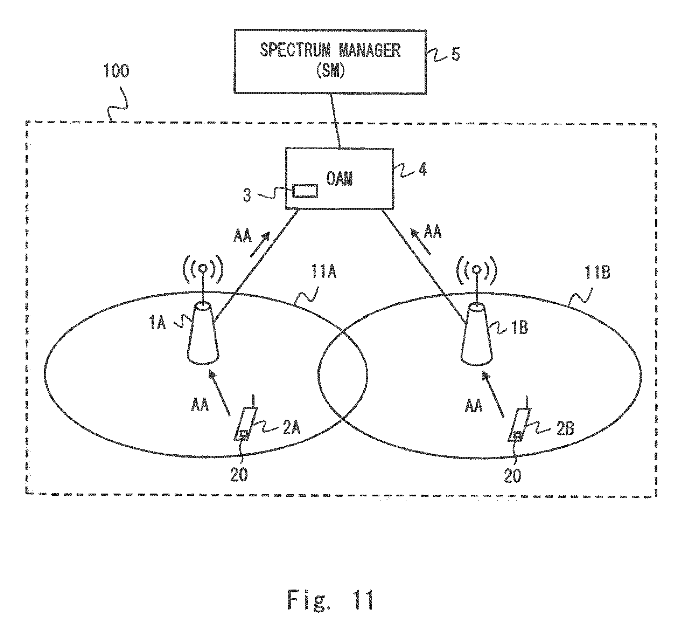

Fig. 11 shows a configuration example of a radio network including the radio communication system 100 according to this embodiment. The radio communication system 100 shown in Fig. 11 includes, similar to Fig. 6, two radio stations 1A and 1B. The operation and management apparatus (OAM) 4 includes a controller 3. The controller 3 operates to receive terminal information AA from the radio terminals 2A and 2B. The controller 3 determines the condition including the first condition stated above using the terminal information AA.

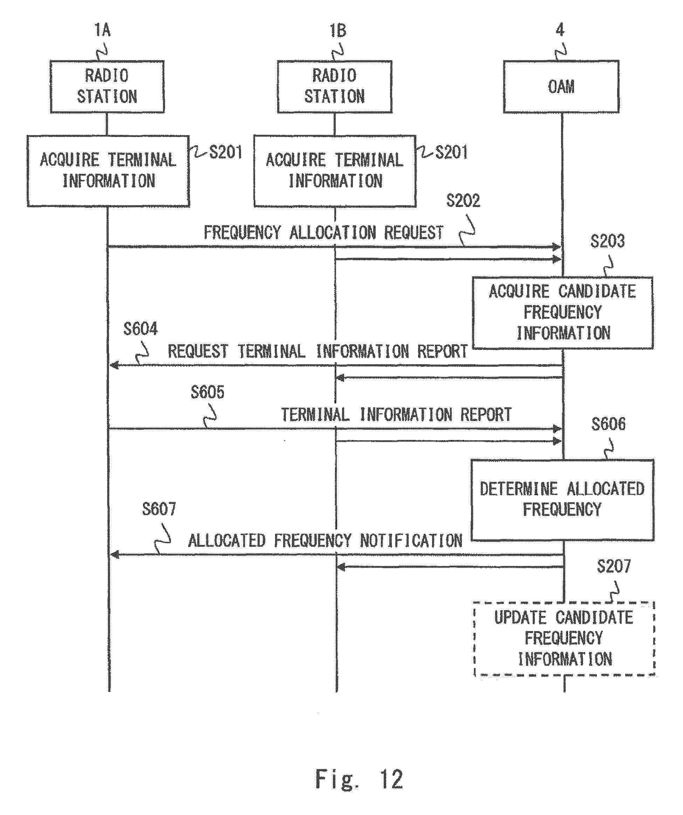

Fig. 12 is a sequence diagram showing a specific example of a procedure for controlling the utilization of the shared frequency in the radio communication system 100 according to this embodiment. While the radio stations 1A and 1B are shown in Fig. 12, the two radio stations operate in a similar way. The processing in Steps S201 to S203 and S207 in Fig. 12 may be the same as the processing in the steps denoted by the same reference symbols shown in Fig. 7.

In Step S604, the operation and management apparatus (OAM) 4 sends the request for a terminal information report to the radio stations 1A and 1B. In Step S605, the radio stations 1A and 1B send the terminal information report to the operation and management apparatus (OAM) 4. The terminal information report of the radio station 1A includes terminal information regarding the radio terminal 2A belonging to the cell 11A. As already described above, the terminal information is used to determine whether to allow the radio station 1 to use the shared frequency. The terminal information includes, for example, at least one of terminal radio access capability, terminal system capability, terminal communication amount, terminal service, and terminal location information.

In Step S606, the operation and management apparatus (OAM) 4 determines the allocated frequency for each of the radio stations 1A and 1B. In other words, the operation and management apparatus (OAM) 4 determines whether to allow the utilization of the shared frequency for each of the radio stations 1A and 1B. In the determination in Step S606, the determination condition including the first condition stated above is used.

In Step S607, the operation and management apparatus (OAM) 4 notifies each of the radio stations 1A and 1B of the allocated frequency. When none of the candidate frequencies satisfy the condition, the operation and management apparatus (OAM) 4 notifies the corresponding radio station 1 that the frequency allocation is not conducted.

The procedure shown in Fig. 12 is merely one example. As described with reference to Fig. 7, the timing of acquiring the terminal information AA by the radio stations 1A and 1B (S201) and the timing of acquiring the candidate frequency information by the operation and management apparatus (OAM) 4 may be changed as appropriate.

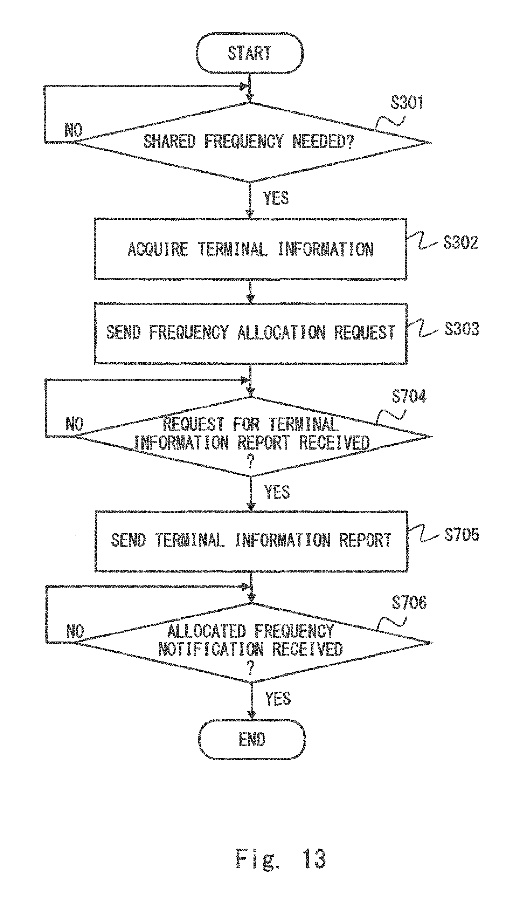

Fig. 13 is a flowchart showing one example of an operation performed by the radio stations 1A and 1B for controlling the utilization of the shared frequency. While the operation of the radio station 1A is described here, the radio station 1B may be operated in a similar way. The processing in Steps S301 to S303 in Fig. 13 may be the same as the processing in the steps denoted by the same reference symbols shown in Fig. 8.

Steps S704 and S705 in Fig. 13 correspond to Steps S604 and S605 in Fig. 12. Specifically, the radio station 1A determines whether the radio station 1A has received the request for the terminal information report (Step S704). When the radio station 1A has received the request (YES in Step S704), the radio station 1A sends the terminal information report to the operation and management apparatus (OAM) 4 (Step S705).

Step S706 shown in Fig. 13 corresponds to Step S607 shown in Fig. 12. More specifically, the radio station 1A determines whether the radio station 1A has received notification of the allocated frequency (Step S706). When the radio station 1A has received the notification of the allocated frequency (YES in Step S706), the radio station 1A may configure the cell 11A using the allocated frequency to start communication with the radio terminal 2A.

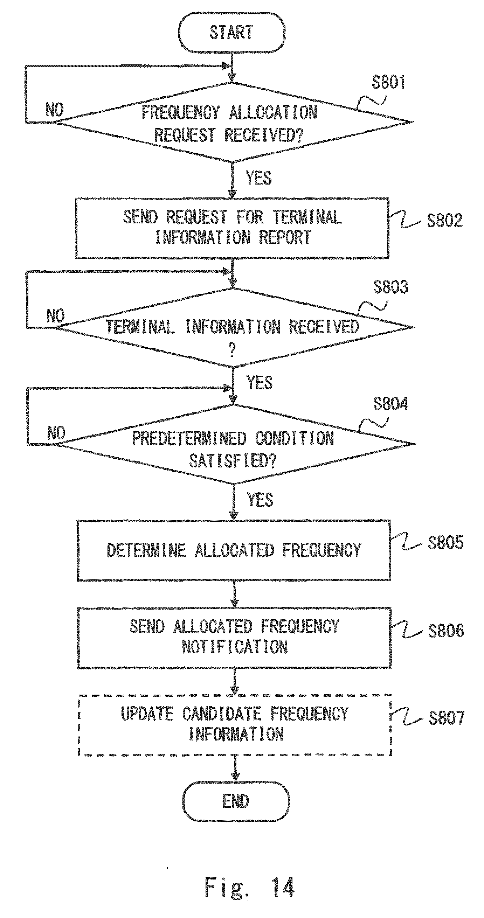

Fig. 14 is a flowchart showing one example of an operation performed by the operation and management apparatus (OAM) 4 for controlling the utilization of the shared frequency. Step S801 corresponds to Step S202 shown in Fig. 12. Specifically, the operation and management apparatus (OAM) determines whether the OAM has received the frequency allocation request from the radio stations 1A and 1B (Step S801). Steps S802 and S803 correspond to Steps S604 and S605 shown in Fig. 12. Specifically, the operation and management apparatus (OAM) 4 sends the request for the terminal information report (Step S802). The operation and management apparatus (OAM) 4 then determines whether the OAM 4 has received the terminal information report (Step S803).

Steps S804 and S805 correspond to Step S606 shown in Fig. 12. In short, upon receiving the terminal information report (YES in Step S803), the operation and management apparatus (OAM) 4 determines, for each of the candidate frequencies, whether the determination condition is satisfied (Step S804). The determination condition includes the first condition regarding communication capability on the shared frequency of the radio terminal 2A. When there is a candidate frequency that satisfies the determination condition (YES in Step S804), the operation and management apparatus (OAM) 4 determines the candidate frequency as the allocated frequency to the radio station 1A or 1B (Step S805).

Step S806 corresponds to Step S607 shown in Fig. 12. Specifically, in Step S806, the operation and management apparatus (OAM) 4 sends the allocated frequency notification to the radio station 1A or 1B. Step S807 corresponds to Step S207 shown in Fig. 12. Specifically, the operation and management apparatus (OAM) 4 updates candidate frequency information according to the allocation of any of the candidate frequencies to the radio station 1A or LIB.

In this embodiment, the determination condition including the first condition used to determine availability of the shared frequency may be configured in advance in the operation and management apparatus (OAM) 4. Alternatively, the determination condition may be sent to the operation and management apparatus (OAM) 4 together with the information indicating the candidate frequencies from another apparatus or system such as a frequency management apparatus (SM) 5. The determination condition may be the same or different for the candidate frequencies. Further, the determination condition may be the same or different for the plurality of radio stations 1.

Further, when notifying the radio stations 1A and 1B of the allocated frequency, the operation and management apparatus (OAM) 4 may send to the radio stations 1A and 1B the upper limit value of the downlink transmission power. Further, the operation and management apparatus (OAM) 4 may send to the radio stations 1A and 1B an absolute time or a relative time indicating the time limit that the candidate frequencies can be utilized. The upper limit value and the absolute or relative time may be the same or different for the candidate frequencies.

### Fifth embodiment

In this embodiment, a modified example of the fourth embodiment will be described. Shown in this embodiment is an example in which the controller 3 is integrally arranged with the operation and management apparatus (OAM) 4, similar to the fourth embodiment. However, this embodiment shows a modified example of the signaling between the radio station 1 and the operation and management apparatus (OAM) 4. Specifically, the operation and management apparatus (OAM) 4 receives from the radio station 1 the terminal information report together with the request for allocation of the shared frequency. Alternatively, the operation and management apparatus (OAM) 4 may receive the terminal information report from the radio station 1 instead of receiving the request for the allocation of the shared frequency. This makes it possible to reduce the signaling between the operation and management apparatus (OAM) 4 and the radio station 1.

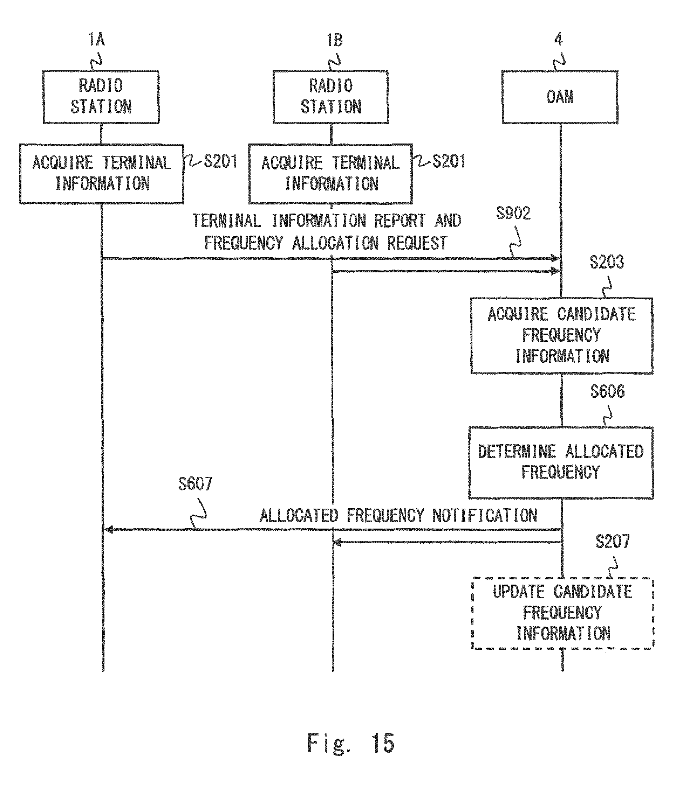

The configuration example of the radio network including the radio communication system 100 according to this embodiment may be similar to the configuration according to the fourth embodiment shown in Fig. 11. Fig. 15 is a sequence diagram showing a specific example of a procedure for controlling the utilization of the shared frequency in the radio communication system 100 according to this embodiment. As will be clear from the comparison between Fig. 15 and Fig. 12, Fig. 15 includes Step S902 in place of Steps S202, S604, and S605 shown in Fig. 12. In Step S902, the radio stations 1A and 1B each send the terminal information report and the frequency allocation request. Note that the terminal information report and the frequency allocation request may be different messages. The timing of acquiring the terminal information AA by the radio stations 1A and 1B (S201) and the timing of acquiring the candidate frequency information by the operation and management apparatus (OAM) 4 may be changed as appropriate.

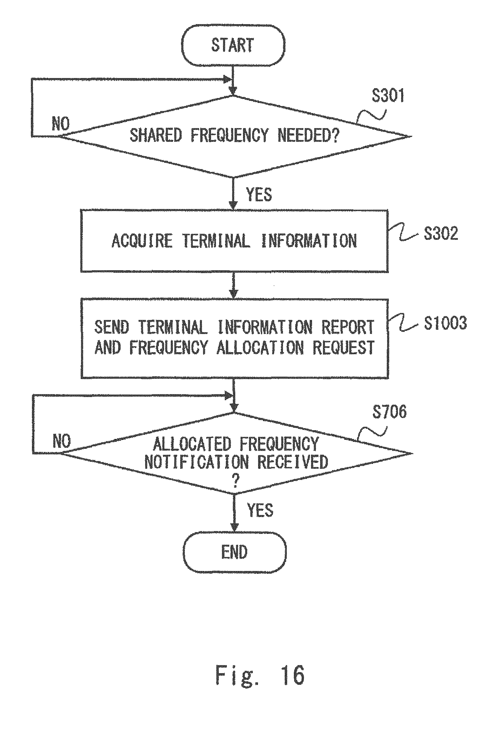

Fig. 16 is a flowchart showing one example of an operation performed by the radio stations 1A and 1B for controlling the utilization of the shared frequency. As will be clear from the comparison between Fig. 16 and Fig. 13, Fig. 16 includes Step S1003 in place of Steps S303, S704, and S705 shown in Fig. 13. In Step S1003, the radio stations 1A and 1B each send the terminal information report and the frequency allocation request.

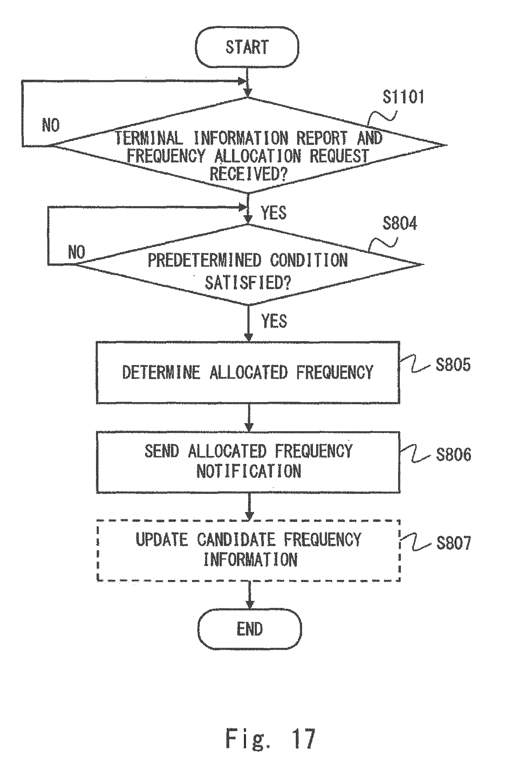

Fig. 17 is a flowchart showing an example of an operation performed by the operation and management apparatus (OAM) 4 for controlling the utilization of the shared frequency. As is clear from the comparison between Fig. 17 and Fig. 14, Fig. 17 includes Step S1101 in place of Steps S801 to S803 shown in Fig. 14. In Step S1101, the operation and management apparatus (OAM) 4 determines whether the OAM 4 has received the terminal information report and the frequency allocation request. When the operation and management apparatus (OAM) 4 has received the terminal information report and the frequency allocation request (YES in Step S1101), the operation and management apparatus (OAM) 4 executes Step S804 and the following processing.

### Sixth embodiment

Described in detail in this embodiment is a case in which the radio communication system 100 according to the first to fifth embodiments stated above is an LTE system. When the radio communication system 100 is an LTE system, the radio station 1 corresponds to a radio base station (i.e., eNB) and the radio terminal 2 corresponds to a UE,

Further, the conditions (1) to (9) indicated as the specific examples of the first condition regarding the communication capability of the UE 2 in the shared frequency and the terminal radio access capability described regarding the specific example of the terminal information can be called "UE radio access capability". The UE radio access capability includes, for example, information (i.e., SupportedBandListEUTRA information) regarding whether or not the UE is able to perform communication on a candidate frequency to be allocated. The SupportedBandListEUTRA information is one of the information elements contained in UE Capability Information transmitted from the UE to the Evolved Universal Terrestrial Radio Access Network (E-UTRAN). The SupportedBandListEUTRA information indicates a frequency band supported by the UE 2. Further, the UE radio access capability may include information (i.e., Supported B and Combination information) indicating capability of concurrently using the frequency band of current camped cell and the candidate frequency to be allocated.

The terminal system capability can be called "UE Non-Access-Stratum (NAS) capability". The UE NAS capability may include information (i.e., CognitiveCapability information) indicating presence or absence of cognitive radio capability (e.g., sensing capability). In the LTE, a mobility management apparatus (Mobility Management Entity (MME)) located within a core network (Evolved Packet Core (EPC)) acquires the terminal system capability (UE NAS capability) from the radio terminal through the radio base station (eNB). When the terminal system capability (UE NAS capability) is used in the radio base station (eNB), the eNB acquires it from the MME.

Further, when the shared frequency is utilized for inter-terminal direct communication (called UE direct communication, D2D (Device-to-Device) communication, UE-to-UE communication or the like), the terminal system capability may include information indicating presence or absence of inter-terminal direct communication capability. The inter-terminal communication capability may be defined as terminal radio access capability, not as terminal system capability.

Further, the terminal service indicated as a specific example of the terminal information may be a Quality of Service (QoS) or a QoS Class Indicator (QCI) of the service being executed or requested by the UE 2.

Further, the terminal location information indicated as a specific example of the terminal information may be location information acquired by a GPS or may be location information acquired by a location information service (Location Service (LCS)) provided by a network (e.g., location information acquired by the OTDOA method). The terminal location information may be the radio quality measured by the UE 2 (e.g., cell identifier and received quality of the reference signal of each cell). The radio quality measured by the UE 2 is also called an RF fingerprint.

### Seventh embodiment

Described below in detail in this embodiment is a case in which the radio communication system 100 according to the third embodiment stated above is an LTE system and the shared frequency is TVWS. In summary, this embodiment shows an example in which the controller 3 is integrally arranged with the radio station (i.e., eNB) 1.

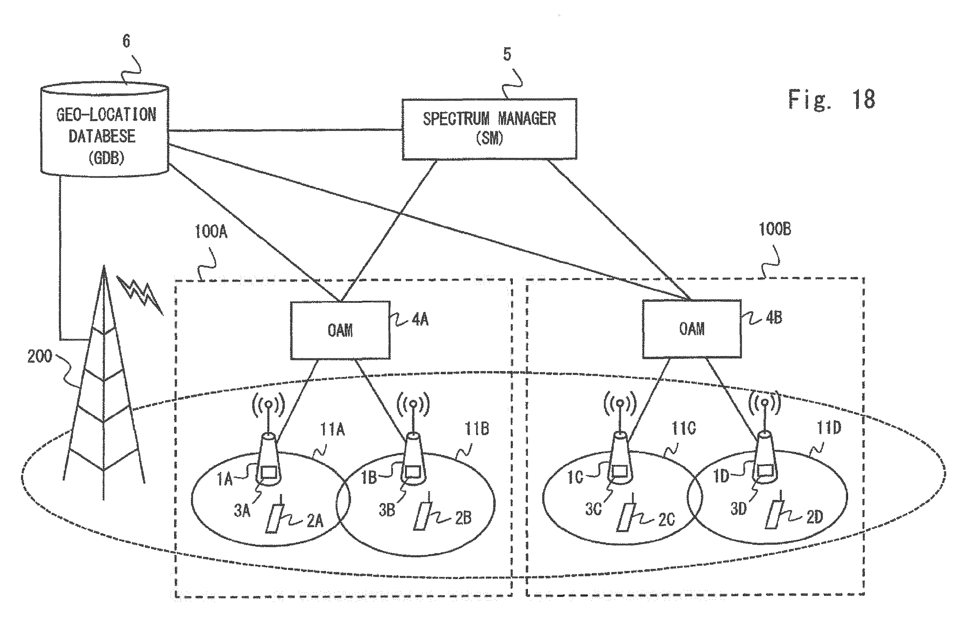

Fig. 18 shows a configuration example of a radio network including the radio communication system (i.e., LTE system) 100 according to this embodiment. The example shown in Fig. 18 includes two LTE systems 100A and 100B. The LTE system 100A includes two eNBs 1A and 1B. The eNB 1A operates a cell 11A and communicates with a UE 2A belonging to the cell 11 A. The eNB 1B operates a cell 11B and communicates with a UE 2B belonging to the cell 11B. An operation and management apparatus (OAM) 4A manages a plurality of radio stations 1 (including the eNBs 1A and 1B) included in the LTE system 100A.

Similarly, the LTE system 100B includes two eNBs 1C and 1D. The eNB 1C operates a cell 11C and communicates with a UE 2C belonging to the cell 11C. In a similar way, the eNB 1D operates a cell 11 D and communicates with a UE 2D belonging to the cell 11D. An operation and management apparatus (OAM) 4B manages a plurality of radio stations 1 (including the eNBs 1C and 1D) included in the LTE system 100B.

The operation and management apparatuses (OAMs) 4A and 4B communicate with the frequency management apparatus (SM) 5 and receive the shared frequency information from the frequency management apparatus (SM) 5. The shared frequency information indicates an available shared frequency (i.e., at least one candidate frequency). The operation and management apparatuses (OAMs) 4A and 4B may directly receive the shared frequency information from the Geo-location Database (GDB) 6 without the intervention of the frequency management apparatus (SM) 5. The GDB 6 manages the status of utilization of the frequency band (i.e., TV band) licensed to the TV broadcasting system 200 and provides information of the frequency band (e.g., TVWS) which can be secondarily used.

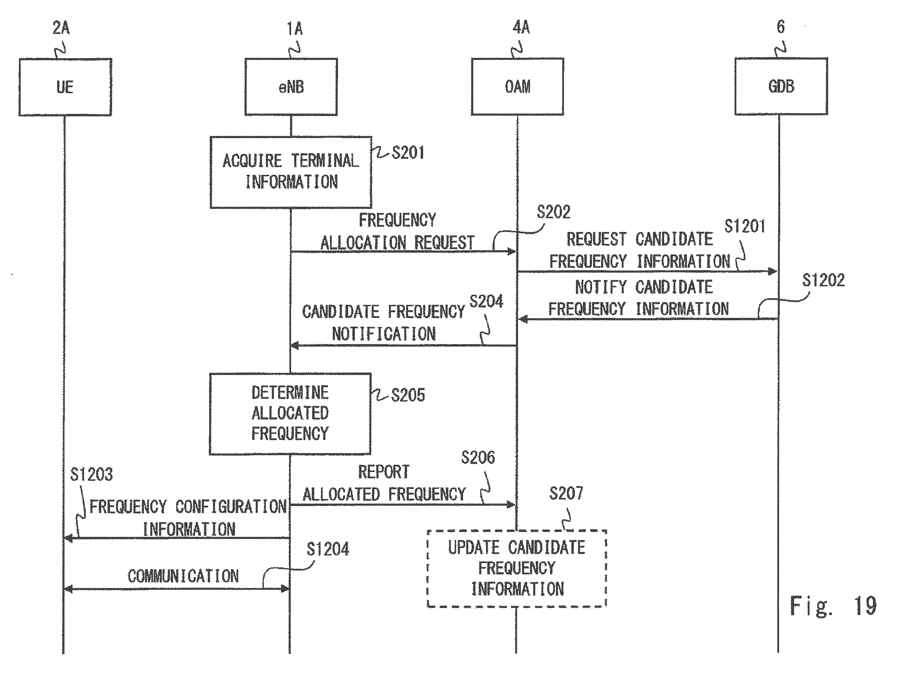

Fig. 19 is a sequence diagram showing a specific example of a procedure for controlling the utilization of the shared frequency in the LTE system 100A according to this embodiment. While the eNB 1A is shown in Fig. 19, the operation of the eNB 1B is similar to that of the eNB 1A. Further, the LTE system 100B may execute the procedure similar to that in the LTE system 100A shown in Fig. 19.

The processing in Steps S201, S202, and S204 to S207 shown in Fig. 19 may be the same as that in the steps denoted by the same reference symbols shown in Fig. 7. Steps S1201 and S1202 in Fig. 19 are specific examples of the acquisition of the candidate frequency information (Step S203) shown in Fig. 7. Specifically, in Step S1201, the operation and management apparatus (OAM) 4A sends to the GDB 6 a request for candidate frequency information. In Step S1202, the operation and management apparatus (OAM) 4A receives notification including the candidate frequency information from the GDB 6. The candidate frequency information indicates at least one candidate frequency.

Steps S1203 and S1204 in Fig. 19 show processing for starting communication using the allocated frequency (i.e., TVWS). In Step S1203, the eNB 1A sends the configuration information of the allocated frequency to the UE 2A. In Step S1204, the eNB 1A communicates with the UE 2A on the allocated frequency.

The procedure shown in Fig. 19 is merely an example. As is similar to the description regarding Fig. 7, the timing of acquiring the terminal information by the eNB 1A (S201) and the timing of acquiring the candidate frequency information by the operation and management apparatus (OAM) 4A (S1201 and S1202) may be changed as appropriate.

### Eighth embodiment

Described below in detail in this embodiment is a case in which the radio communication system 100 according to the fifth embodiment stated above is an LTE system and the shared frequency is TVWS. That is, shown in this embodiment is an example in which the controller 3 is integrally arranged with the operation and management apparatus (OAM) 4.

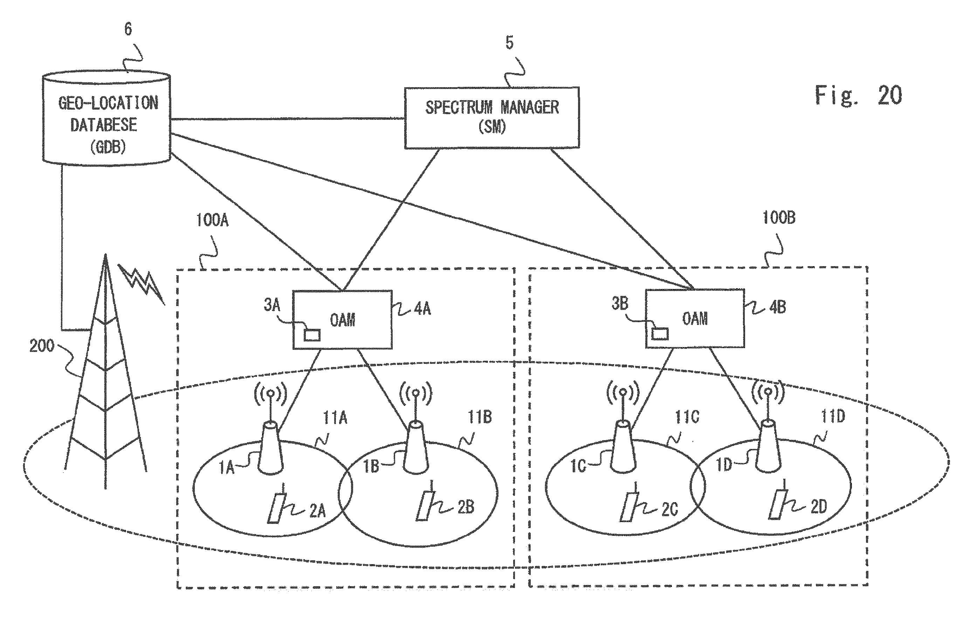

Fig. 20 shows a configuration example of a radio network including the radio communication system (i.e., LTE system) 100 according to this embodiment. The example shown in Fig. 20 includes, similar to Fig. 18, two LTE systems 100A and 100B. The basic configuration of the LTE systems 100A and 100B shown in Fig. 20 is similar to that in Fig. 18. Note that, in Fig. 20, operation and management apparatuses (OAMs) 4A and 4B include controllers 3A and 3B, respectively.

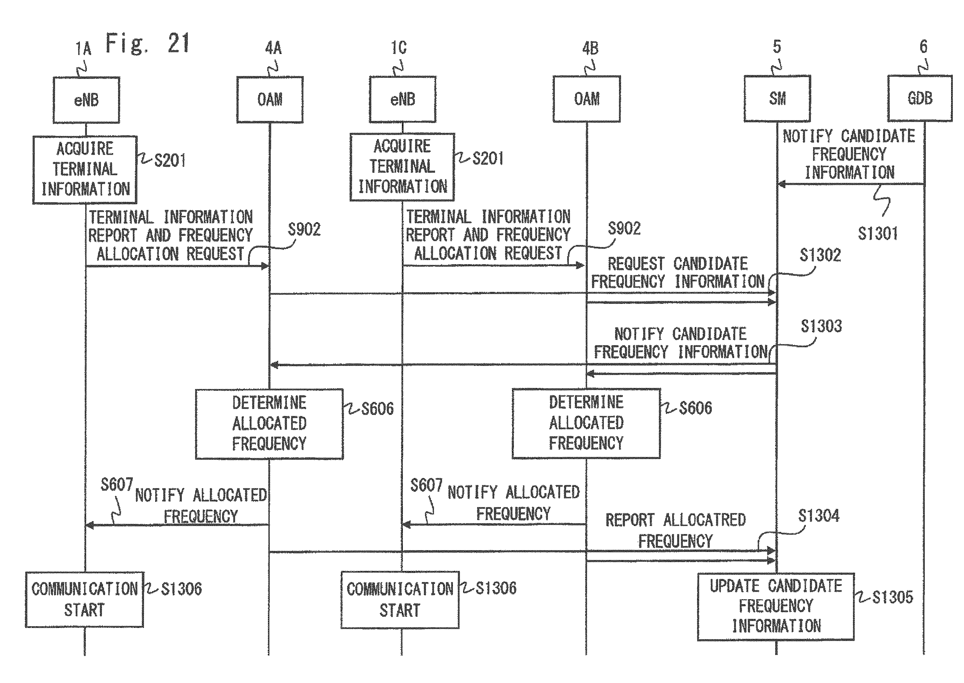

Fig. 21 is a sequence diagram showing a specific example of a procedure for controlling the utilization of the shared frequency in the LTE systems 100A and 100B according to this embodiment. While the eNBs 1A and 1C are shown in Fig. 21, the operations in the eNBs 1B and 1D are similar to those in the eNBs 1A and 1C.

The processing in Steps S201, S902, S606, and S607 shown in Fig. 21 may be the same as that in the steps denoted by the same reference symbols shown in Fig. 15. In Step S1301 shown in Fig. 21, the frequency management apparatus (SM) 5 receives from the GDB 6 information of the TVWS that can be secondarily used, i.e., candidate frequency information. Steps S1302 and S1303 shown in Fig. 21 are specific examples of the acquisition of candidate frequency information (Step S203) shown in Fig. 15. Specifically, in Step S1302, the operation and management apparatuses (OAMs) 4A and 4B each send a request for candidate frequency information to the frequency management apparatus (SM) 5. In Step S1303, the operation and management apparatuses (OAMs) 4A and 4B each receive a notification including the candidate frequency information from the frequency management apparatus (SM) 5. The candidate frequency information indicates at least one candidate frequency.

In Step S1304 shown in Fig. 21, the operation and management apparatuses (OAMs) 4A and 4B each send an allocated frequency report to the frequency management apparatus (SM) 5. The allocated frequency report indicates the candidate frequency determined by the operation and management apparatuses (OAMs) 4A and 4B as the allocated frequency or indicates that the frequency allocation is not carried out. In Step S1305, the frequency management apparatus (SM) 5 updates the information of the candidate frequencies based on the report from the operation and management apparatuses (OAMs) 4A and 4B. In Step S1306, the eNB 1A starts communication with the UE 2A on the allocated frequency. Similar to the eNB 1A, the eNB 1C starts communication with the UE 2C on the allocated frequency.

The procedure shown in Fig. 21 is merely one example. The terminal information report and the frequency allocation request may be different messages, for example. Further, the timing of acquiring the terminal information by the eNBs 1A and 1C (S201) and the timing of acquiring the candidate frequency information by the operation and management apparatus (OAM) 4 (S1302 and S1303) may be changed as appropriate.

### Ninth embodiment

The eighth embodiment described above may be modified as described below. Shown in the eighth embodiment is the example in which the operation and management apparatuses (OAMs) 4A and 4B of each operator determine the allocated frequency from the candidate frequencies (i.e., TVWS). However, the frequency management apparatus (SM) 5 may perform frequency allocation (i.e., frequency management) for a plurality of operator networks. In this case, in Fig. 21, the operation and management apparatuses (OAMs) 4A and 4B may send the frequency allocation request to the frequency management apparatus (SM) 5 in response to receiving the frequency allocation request from the eNBs 1A and 1C. The operation and management apparatuses (OAMs) 4A and 4B may transfer the frequency allocation request messages received from the eNBs 1A and 1C to the frequency management apparatus (SM) 5. At this time, the operation and management apparatuses (OAMs) 4A and 4B may send the terminal information together with the frequency allocation request, or may send the terminal information after receiving the request for the terminal information from the frequency management apparatus (SM) 5.

The frequency management apparatus (SM) 5 determines the allocated frequency for the eNBs 1A and 1C in response to the frequency allocation request. The frequency management apparatus (SM) 5 then sends to the management apparatus (OAM) 4A a notification indicating the frequency to be allocated to the eNB 1A, and also send to the management apparatus (OAM) 4B a notification indicating the frequency to be allocated to the eNB 1C. The operation and management apparatuses (OAMs) 4A and 4B send to the eNBs 1A and 1C respectively a notification indicating the allocated frequency. The eNBs 1A and 1C each start communication with the UE 2A or 2C on each allocated frequency.

As stated above, a network node (or apparatus) such as the frequency management apparatus (SM) 5 allocates frequencies to a plurality of operator networks (or a plurality of operator systems), thereby making it possible to maintain equality among operators and to select the optimum operator network (or operator system) as the destination to which the shared frequency is allocated.

In the eighth and ninth embodiments regarding the LTE system, the case in which the TVWS is utilized in the LTE system is exemplified. Needless to say, however, the eighth and ninth embodiments may also be applied to a case in which there is no primary system like the TV broadcasting system 200 and a plurality of systems share a frequency. The plurality of systems may be a plurality of LTE systems or may include the LTE system and other system.

### Other embodiments

The processing performed by the controller 3 (or 3A to 3D) and the controller 20 described in the first to ninth embodiments may be implemented by using a semiconductor processing device including an Application Specific Integrated Circuit (ASIC). Further, this processing may be implemented by causing a computer system including at least one processor (e.g., microprocessor, MPU, Digital Signal Processor (DSP)) to execute a program. Specifically, one or more programs including instructions for causing a computer system to execute the algorithms regarding the controller 3 or the controller 20 described in the first to ninth embodiments may be created and supplied to the computer.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Furthermore, the embodiments stated above are merely examples of application of the technical ideas obtained by the present inventors. Needless to say, these technical ideas are not limited to those described in the above embodiments, but may be changed in various ways.

This application is based upon and claims the benefit of priority from Japanese Patent Application No. 2012-102335, filed on April 27, 2012, the disclosure of which is incorporated herein in its entirety by reference.

### Reference Signs List

- 1, 1A, 1B, 1C, 1D: RADIO STATIONS
- 2, 2A, 2B, 2C, 2D: RADIO TERMINALS
- 3, 3A, 3B, 3C, 3D: CONTROLLERS
- 4, 4A, 4B: OPERATION AND MANAGEMENT APPARATUSES (OPERATION ADMINISTRATION AND MAINTENANCE (OAM))
- 5: FREQUENCY MANAGEMENT APPARATUS (SPECTRUM MANAGER (SM))
- 6: GEO-LOCATION DATABASE (GDB)
- 11, 11A, 11B, 11C, 11D: CELLS
- 20: CONTROLLER
- 100, 100A, 100B: RADIO COMMUNICATION SYSTEMS
- 200: TV BROADCASTING SYSTEM
- AA: TERMINAL INFORMATION

## Claims

1. A control apparatus comprising:
a controller that operates to control, based on at least one condition, utilization by a first radio station of a shared frequency shared by a plurality of radio systems including a radio communication system that includes the first radio station, the at least one condition including a first condition regarding communication capability on the shared frequency of at least one radio terminal belonging to a cell operated by the first radio station.

2. The control apparatus according to Claim 1. wherein the controller operates to acquire terminal information regarding the at least one radio terminal.

3. The control apparatus according to Claim 2, wherein the terminal information indicates communication capability on the shared frequency of the at least one radio terminal.

4. The control apparatus according to Claim 2 or 3, wherein the terminal information includes at least one of terminal radio access capability and terminal system capability.

5. The control apparatus according to any one of Claims 2 to 4, wherein the terminal information includes at least one of terminal radio access capability, terminal system capability, terminal communication amount, terminal service information, and terminal location information.

6. The control apparatus according to any one of Claims 1 to 5, wherein the controller operates to determine a frequency utilized by the first radio station from at least one candidate frequency including the shared frequency.

7. The control apparatus according to any one of Claims 1 to 6, wherein the controller is arranged in the first radio station.

8. The control apparatus according to any one of Claims 1 to 5, wherein the controller operates to determine a radio station to which the shared frequency is allocated from a plurality of radio stations including the first radio station.

9. The control apparatus according to any one of Claims 1 to 5 and 8, wherein the controller is arranged in an operation and management apparatus that manages the first radio station.

10. The control apparatus according to any one of Claims 1 to 5 and 9, wherein the controller is arranged in a frequency management apparatus that manages utilization of a frequency by the radio communication system.

11. The control apparatus according to any one of Claims 1 to 10, wherein the first condition includes that the number of radio terminals having the communication capability on the shared frequency exceeds a predetermined number or a predetermined ratio.

12. The control apparatus according to any one of Claims 1 to 10, wherein the first condition includes that the number of radio terminals having terminal radio access capability or terminal system capability on the shared frequency exceeds a predetermined number or a predetermined ratio.

13. The control apparatus according to any one of Claims 1 to 10, wherein the first condition includes that a total amount of traffic of radio terminals having terminal radio access capability or terminal system capability on the shared frequency exceeds a predetermined amount.

14. The control apparatus according to any one of Claims 1 to 10, wherein the first condition includes that the number of radio terminals having terminal radio access capability or terminal system capability on the shared frequency and executing a certain service exceeds a predetermined number or a predetermined ratio.

15. The control apparatus according to any one of Claims 1 to 10, wherein the first condition includes that the number of radio terminals having terminal radio access capability or terminal system capability on the shared frequency and requesting a certain service exceeds a predetermined number or a predetermined ratio.

16. The control apparatus according to any one of Claims 1 to 10, wherein the first condition includes that the number of radio terminals having terminal radio access capability or terminal system capability on the shared frequency and located in a certain area exceeds a predetermined number or a predetermined ratio.

17. The control apparatus according to any one of Claims 1 to 10, wherein the first condition includes that the number of radio terminals that can utilize the shared frequency and are located in a certain area exceeds a predetermined number or a predetermined ratio.

18. The control apparatus according to any one of Claims 1 to 10, wherein the first condition includes that a total amount of traffic of radio terminals that can utilize the shared frequency exceeds a predetermined amount.

19. The control apparatus according to any one of Claims 1 to 10, wherein the first condition includes that the number of radio terminals that can utilize the shared frequency and are executing a certain service exceeds a predetermined number or a predetermined ratio.

20. The control apparatus according to any one of Claims 1 to 10, wherein the first condition includes that the number of radio terminals that can utilize the shared frequency and request a certain service exceeds a predetermined number or a predetermined ratio.

21. The control apparatus according to any one of Claims 1 to 20, wherein the shared frequency is preferentially used by a primary system and is secondarily used by the radio communication system.

22. The control apparatus according to any one of Claims 1 to 21, wherein the shared frequency is TV white space.

23. A radio station that is used in a radio communication system and communicates with at least one radio terminal, the radio station comprising:
a controller that operates to acquire terminal information regarding the at least one radio terminal and to control utilization by the radio station of a shared frequency shared by a plurality of radio systems including the radio communication system, wherein
the terminal information includes information regarding communication capability on the shared frequency of the at least one radio terminal.

24. The radio station according to Claim 23, wherein the terminal information includes at least one of terminal radio access capability and terminal system capability.

25. The radio station according to Claim 23 or 24, wherein the terminal information includes at least one of terminal radio access capability, terminal system capability, terminal communication amount, terminal service information, and terminal location information.

26. The radio station according to any one of Claims 23 to 25, wherein the controller operates to acquire the terminal information from the at least one radio terminal.

27. The radio station according to any one of Claims 23 to 26, wherein the controller controls the utilization of the shared frequency by the radio station based on a first condition regarding communication capability on the shared frequency of the at least one radio terminal.

28. The radio station according to Claim 27, wherein the controller operates to determine a frequency utilized by the radio station from at least one candidate frequency including the shared frequency.

29. The radio station according to any one of Claims 23 to 26, wherein the controller further operates to transmit the terminal information to an operation and management apparatus which manages the radio station and to receive information indicating a frequency allocated to the radio station.

30. The radio station according to Claim 27 or 28, wherein the first condition includes that the number of radio terminals having the communication capability on the shared frequency exceeds a predetermined number or a predetermined ratio.

31. A radio terminal that is used in a radio communication system and communicates with a radio station, the radio terminal comprising:
a controller that operates to send terminal information regarding the radio terminal to the radio station which controls utilization of a shared frequency shared by a plurality of radio systems including the radio communication system, the terminal information including information regarding communication capability on the shared frequency.

32. The radio terminal according to Claim 31, wherein the terminal information includes at least one of terminal radio access capability and terminal system capability.

33. The radio terminal according to Claim 31 or 32, wherein the terminal information includes at least one of terminal radio access capability, terminal system capability, terminal communication amount, terminal service information, and terminal location information.

34. The radio terminal according to any one of Claims 31 to 33, wherein the radio station controls the utilization of the shared frequency based on a first condition regarding communication capability on the shared frequency of at least one radio terminal including the radio terminal.

35. The radio terminal according to Claim 34, wherein the first condition includes that the number of radio terminals having the communication capability on the shared frequency exceeds a predetermined number or a predetermined ratio.

36. A method of controlling utilization of a shared frequency, the method comprising:
controlling, based on at least one condition, utilization by a first radio station of a shared frequency shared by a plurality of radio systems including a radio communication system that includes the first radio station, the at least one condition including a first condition regarding communication capability on the shared frequency of at least one radio terminal belonging to a cell operated by the first radio station.

37. The method according to Claim 36, further comprising acquiring terminal information regarding the at least one radio terminal.

38. The method according to Claim 37, wherein the terminal information indicates communication capability on the shared frequency of the at least one radio terminal.

39. The method according to Claim 37 or 38, wherein the terminal information includes at least one of terminal radio access capability and terminal system capability.

40. The method according to any one of Claims 37 to 39, wherein the terminal information includes at least one of terminal radio access capability, terminal system capability, terminal communication amount, terminal service information, and terminal location information.

41. The method according to any one of Claims 36 to 40, wherein the first condition includes that the number of radio terminals having the communication capability on the shared frequency exceeds a predetermined number or a predetermined ratio.

42. A method performed by a radio station that is used in a radio communication system and communicates with at least one radio terminal, the method comprising:
acquiring terminal information regarding the at least one radio terminal; and
controlling utilization by the radio station of a shared frequency shared by a plurality of radio systems including the radio communication system, wherein
the terminal information includes information regarding communication capability on the shared frequency of the at least one radio terminal.

43. The method according to Claim 42, wherein the terminal information includes at least one of terminal radio access capability, terminal system capability, terminal communication amount, terminal service information, and terminal location information.

44. The method according to Claim 42 or 43, wherein the controlling includes controlling the utilization of the shared frequency by the radio station based on a first condition regarding the communication capability on the shared frequency of the at least one radio terminal,

45. A method performed by a radio terminal that is used in a radio communication system and communicates with a radio station, the method comprising:
sending terminal information regarding the radio terminal to the radio station which controls utilization of a shared frequency shared by a plurality of radio systems including the radio communication system, wherein
the terminal information includes information regarding communication capability on the shared frequency.

46. The method according to Claim 45, wherein the terminal information includes at least one of terminal radio access capability, terminal system capability, terminal communication amount, terminal service information, and terminal location information.

47. The method according to Claim 45 or 46, wherein the radio station controls the utilization of the shared frequency based on a first condition regarding communication capability on the shared frequency of the at least one radio terminal including the radio terminal.
